(19) Europäisches Patentamt European Patent Office Office européen des brevets

(11) **EP 1 104 091 B1**

(12) **FASCICULE DE BREVET EUROPEEN**

(45) Date de publication et mention
de la délivrance du brevet:
**25.04.2007 Bulletin 2007/17**

(51) Int Cl.:
***H02P 9/42*** *(2006.01)*

(21) Numéro de dépôt: **00403252.0**

(22) Date de dépôt: **22.11.2000**

(54) **Générateur électrique autonome, notamment pour aéronef**

Autonomer elektrischer Generator, insbesondere für Flugzeuge

Autonomous electric generator, especially for aircraft

(84) Etats contractants désignés:
**DE FR GB**

(30) Priorité: **24.11.1999 FR 9914780**

(43) Date de publication de la demande:
**30.05.2001 Bulletin 2001/22**

(73) Titulaire: **DASSAULT AVIATION**
**F-75008 Paris (FR)**

(72) Inventeurs:
 • **Montret, Christophe**
 **92800 Puteaux (FR)**
 • **Jacquet-Francillon, Christian Marie Pierre**
 **78690 Les Essarts le Roi (FR)**

(74) Mandataire: **Colas, Jean-Pierre et al**
**Cabinet JP Colas**
**37, avenue Franklin D. Roosevelt**
**75008 Paris (FR)**

(56) Documents cités:
 • **JEONG S G ET AL: "STEADY STATE ANALYSIS OF A STAND-ALONE WOUND ROTOR INDUCTION GENERATOR EXCITED BY A PWM INVERTER" CONFERENCE RECORD INDUSTRY APPLICATIONS SOCIETY ANNUAL MEETING, 18 octobre 1987 (1987-10-18), XP002054986**
 • **YIFAN TANG ET AL: "A Flexible Active and Reactive Power Control Strategy for a Variable Speed Constant Frequency Generating System" IEEE TRANSACTIONS ON POWER ELECTRONICS, vol. 10, no. 4, - juillet 1995 (1995-07) pages 472-478, XP000924888**
 • **MEBARKI A ET AL: "A NOVEL VARIABLE SPEED CONSTANT FREQUENCY GENERATION SYSTEM WITH VOLTAGE REGULATION" EUROPEAN CONFERENCE ON POWER ELECTRONICS AND APPLICATIONS,B, BRUSSELS, EPE ASSOCIATION, vol. CONF. 6, 1995, pages 2465-2471, XP000537781**

## Description

La présente invention est relative à la production d'énergie électrique par un générateur électrique autonome, du type utilisé en particulier dans les aéronefs.

Plus particulièrement, l'invention concerne un procédé de commande d'un tel générateur électrique.

Un tel procédé de commande pour générateur électrique est décrit dans un article de Yifan Tang et al. dans IEEE Transactions On Power Electronics, Vol. 10, No. 4, Juillet 1995.

Ce procédé de commande connu est appliqué à une machine asynchrone dont le stator est connecté au réseau et dont le rotor bobiné est entraîné mécaniquement, le procédé utilisant, pour assurer l'alimentation électrique du bobinage rotorique, une source de tension continue constante qui, par l'intermédiaire d'un onduleur piloté par un circuit de commande par variation de largeur d'impulsions, envoie l'énergie électrique dans le rotor.

La source de courant continu de ce dispositif de commande connu comprend également un convertisseur alternatif/continu ou redresseur qui est piloté par un circuit de commande par variation de largeur d'impulsions et qui alimente un condensateur connecté à l'entrée de l'onduleur.

Les circuits de commande de l'onduleur et du redresseur sont pilotés par des boucles de réglage destinées à réguler le fonctionnement du générateur de telle façon que certains critères de fonctionnement soient respectés. Plus précisément, le système de régulation vise à obtenir une commande stable en réglant les puissances active et réactive du générateur. Ainsi, les boucles de réglage reçoivent, en tant que grandeurs de consigne, une valeur de référence de puissance active et une valeur de référence de puissance réactive.

Cependant, ce procédé de commande est conçu pour être appliqué à des générateurs branchés sur des réseaux d'électricité de très grande puissance dont la fréquence et la tension sont imposées par le réseau lui-même, comme par exemple un réseau public de fourniture d'énergie électrique.

Le document de Jeond et al. intitulé « Steady state analysis of a stand alone wound rotor induction generator excited by a PMW inverter », (document XP-002054986), décrit un procédé de commande d'un générateur électrique autonome comportant une machine tournante asynchrone dont le rotor est bobiné et entraîné mécaniquement et une association d'un redresseur et d'un inverseur à modulation en largeur d'impulsion (PWM inverter) comme moyen d'excitation du rotor. Le contrôle de la tension de sortie est obtenu dans ce dispositif par ajustement de l'indice de modulation de l'inverseur à modulation en largeur d'impulsion. Dans ce dispositif une source de tension continue auxiliaire permet la génération de la tension de démarrage du générateur.

Le document de EuMebarki et al. intitulé « A novel variable speed constant frequency generation system with voltage regulation », Conférence européenne d'électronique de puissance (EPE 1995), p. 2465 à 2471, (document XP-000537781) décrit un générateur destiné à délivrer une tension et un fréquence constante (CVCF pour « constant voltage, constant frequency ») dont le principe est illustré sur la figure 4 de ce document. Dans ce dispositif, on montre qu'au moyen de deux boucles de régulation indépendantes pour la tension et pour la fréquence, il est possible de conserver une tension et fréquence constante, indépendamment des variations de vitesse (« prime mover speed » n) et de la charge appliquée au générateur.

Or, dans certaines applications de ces générateurs électriques, le réseau qu'ils alimentent est de taille relativement petite, comme c'est le cas dans les aéronefs par exemple, réseaux dont la tension et la fréquence ne sont pas imposées de l'extérieur, mais dépendent de conditions de fonctionnement particulières du générateur, comme par exemple la charge qui lui est appliquée ou la vitesse de rotation à laquelle il est entraîné. Dans de telles applications, la vitesse de rotation du dispositif d'entraînement du générateur peut varier considérablement. Ainsi, par exemple, dans un aéronef, cette vitesse dépend de la vitesse de rotation des moteurs de propulsion, de sorte qu'elle peut varier facilement du simple à plus que le double (de 500 à 1200 rad/sec par exemple).

L'invention vise à fournir un procédé de commande d'un générateur électrique autonome permettant de produire de l'énergie électrique à un réseau d'électricité de taille relativement faible à une tension nominale déterminée d'une fréquence constante ou variable selon l'application. Quoi qu'il en soit, l'intérêt de l'invention est de pouvoir réduire la plage de variation de la fréquence par rapport à la plage de variation de la vitesse de rotation.

L'invention a donc pour objet un procédé de commande d'un générateur électrique autonome tel que défini dans la revendication 1.

L'invention a également pour objet un générateur électrique autonome, notamment pour aéronef, tel que défini dans la revendication 18.

D'autres caractéristiques et avantages de l'invention apparaîtront au cours de la description qui va suivre, donnée uniquement à titre d'exemple et faite en se référant aux dessins annexés sur lesquels:

la figure 1 est un schéma simplifié général d'un générateur électrique autonome comprenant un exemple de dispositif de commande permettant de mettre en oeuvre le procédé de l'invention;
la figure 2 est un schéma fonctionnel d'une boucle de réglage utilisée dans le dispositif de commande représenté sur la figure 1;
la figure 3 est un schéma d'un bloc de démarrage du générateur électrique représenté sur la figure 1; et
les figures 4 et 5 sont des graphiques illustrant le procédé selon l'invention.

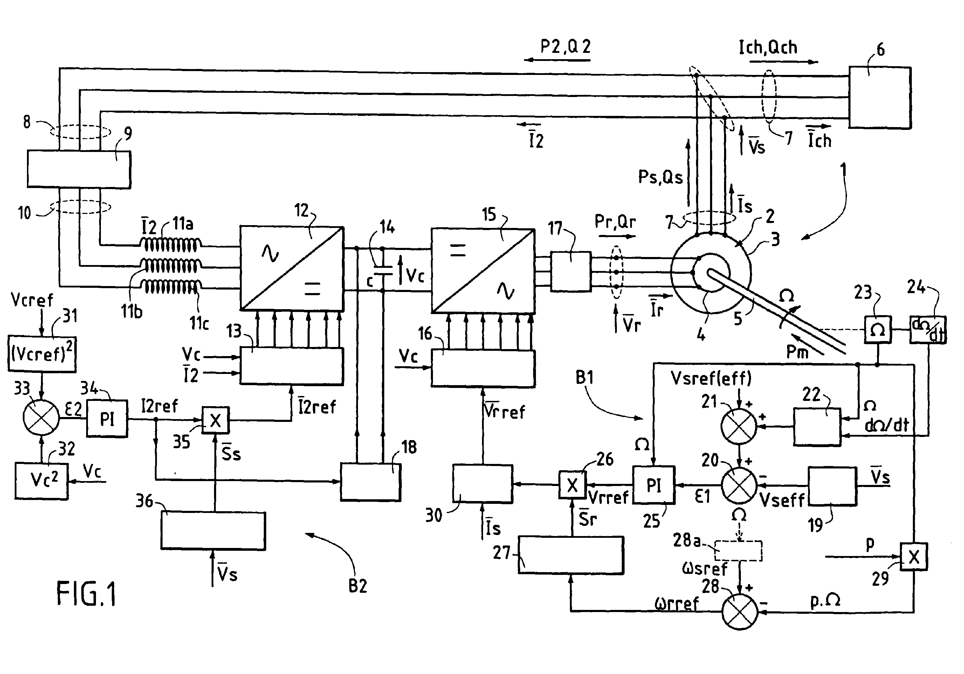

On a représenté sur la figure 1 un générateur électrique autonome désigné par la référence générale 1. Ce générateur 1 comprend une machine tournante asynchrone 2 avec un stator 3 et un rotor bobiné 4. Ce dernier est entraîné par une source d'énergie mécanique (non représentée) par l'intermédiaire d'une liaison mécanique tournante symbolisée par le double trait 5 sur la figure 1. Le générateur 1 fournit de l'énergie à un réseau 6 à une tension Vs ayant une pulsation ωs, constante dans l'exemple décrit.

Bien qu'elle n'y soit pas limitée, l'invention s'applique avec une efficacité particulière aux générateurs électriques de puissance relativement faible, utilisés par exemple dans les aéronefs pour alimenter le réseau de bord. Dans un tel cas, la source d'énergie mécanique utilisée pour entraîner la machine asynchrone 2 est un moteur de propulsion de l'aéronef dont on sait que la vitesse de rotation est variable dans une large plage.

Dans le mode de réalisation représenté, on a supposé que la machine asynchrone 2 est de type triphasé, comme l'est également le réseau 6. Toutefois, l'invention n'est pas limitée à une telle machine asynchrone triphasée, le procédé de commande selon l'invention pouvant également être utilisé pour le cas où une tension électrique ayant un nombre de phases différent doit être engendrée.

Le stator 3 est connecté directement au réseau 6 par des conducteurs 7. Il est également connecté par des conducteurs 8 à un filtre à haute fréquence 9. La sortie sur trois phases 10 de ce filtre 9 est reliée à un jeu de trois selfs 11a ,11b, 11c à raison d'une pour chaque phase, elles-mêmes branchées à l'entrée d'un redresseur commandé 12 dont la tension de sortie peut être pilotée par l'intermédiaire d'un circuit de commande par variation de largeur d'impulsions 13. De tels redresseurs commandés et leur circuit de commande sont connus des spécialistes et on ne les décrit donc pas en détail dans la présente description.

La sortie de tension continue du redresseur 12 est reliée à un condensateur tampon 14 qui, en aval, fait office de source de tension continue constante. Ce condensateur 14 est connecté à l'entrée d'un onduleur commandé 15 dont la tension de sortie peut être pilotée par l'intermédiaire d'un circuit de commande 16 de modulation par largeur d'impulsions, composants qui sont également bien connus des spécialistes.

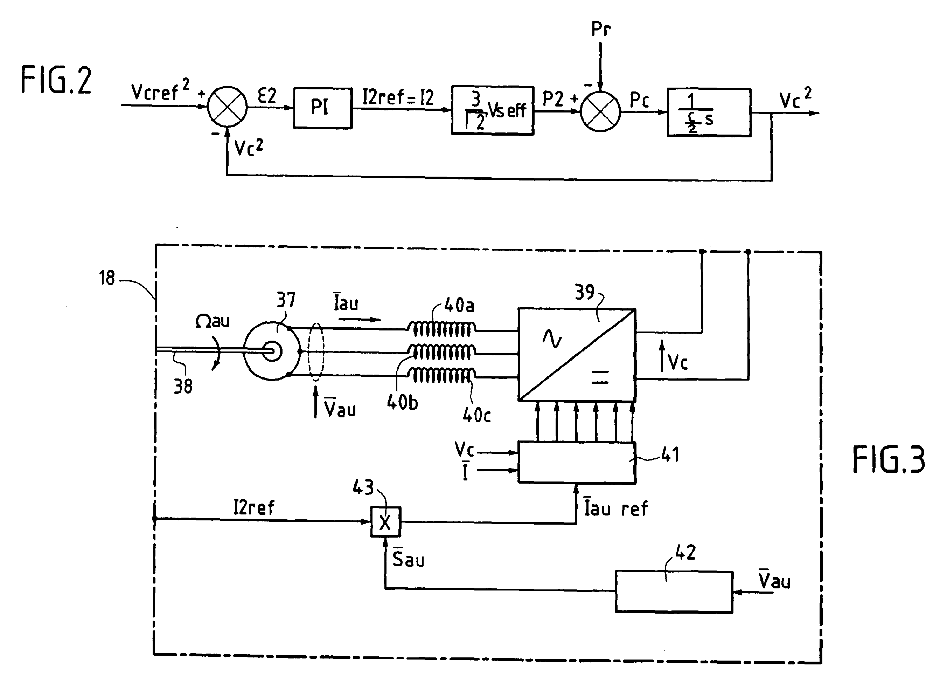

La sortie alternative triphasée de l'onduleur commandé 15 est appliquée à un filtre à haute fréquence 17 auquel est raccordé le rotor bobiné 4 de la machine asynchrone 2. On voit donc que le rotor 4 est alimenté par cette machine 2 elle-même, à laquelle il prélève une partie de l'énergie électrique produite. Comme cette énergie n'est délivrée que si le générateur fonctionne, le procédé de commande selon l'invention met également en oeuvre un dispositif de démarrage 18 qui, sur la figure 1, apparaît sous la forme d'un bloc fonctionnel, ses détails étant représentés sur la figure 3 décrite plus loin.

Selon une variante de l'invention, il serait possible d'utiliser à la place des éléments 8 à 14, tout autre source de tension continue constante alimentant l'onduleur 15.

On donnera ci-dessous la liste des symboles désignant les paramètres et grandeurs utilisés dans la suite de la description et dans les figures annexées.

| | |
|---|---|
| Ps | Puissance active stator |
| Qs | Puissance réactive stator |
| Pr | Puissance active rotor |
| Qr | Puissance réactive rotor |
| Pch | Puissance active réseau |
| Qch | Puissance réactive réseau |
| P2 | Puissance active injectée dans le circuit du rotor par le stator |
| Q2 | Puissance réactive injectée dans le circuit du rotor par le stator |
| $\bar{I}s$ | Courant statorique |
| $\bar{I}r$ | Courant rotorique |
| $\bar{I}2$ | Courant prélevé du courant statorique pour le rotor |
| $\bar{I}ch$ | Courant réseau |
| $\bar{V}s$ | Tension statorique |
| $\bar{V}r$ | Tension rotorique |
| Vc | Tension continue constante à l'entrée de l'onduleur |
| Pm | Puissance mécanique appliquée au rotor |
| ωsref | Consigne de pulsation statorique |
| ωrref | Consigne de pulsation rotorique |
| Vrref | amplitude de consigne de la tension rotorique |
| Ω | Vitesse de rotation de l'arbre d'entraînement du rotor |
| p | Nombre de paires de pôles de la machine asynchrone |
| Vsref(eff) | Consigne de tension efficace statorique |

| Vseff | Tension efficace statorique |
|---|---|
| $\overline{V}\,rref$ | Consigne de tension rotorique |
| $\overline{S}r$ | Tension rotorique sinusoïdale d'amplitude normée |
| $\overline{S}s$ | Tension statorique sinusoïdale d'amplitude normée |
| Vcref | Consigne de tension continue de la source de tension constante |
| $\overline{I2}ref$ | Consigne du courant prélevé pour le rotor |
| I2ref | Amplitude de consigne du courant prélevé pour le rotor |
| $\overline{V}au$ | Tension du générateur auxiliaire de démarrage |
| $\overline{I}au$ | Courant du générateur auxiliaire de démarrage |
| $\overline{I}auref$ | Consigne de courant du générateur auxiliaire de démarrage |
| $\overline{S}au$ | Tension sinusoïdale d'amplitude normée pour le générateur auxiliaire de démarrage |

N.B. Les grandeurs pourvues du signe ‾ sont triphasées

On va maintenant décrire une première boucle de réglage B1 destinée à engendrer la consigne de tension $\overline{V}$rref utilisée pour commander le rapport cyclique des impulsions régissant le fonctionnement de l'onduleur 15.

La tension $\overline{V}$s est appliquée à un bloc de conversion 19 destiné à engendrer un signal continûment variable représentant la valeur efficace Vseff de cette tension. La sortie de ce bloc de conversion 19 est connectée à l'une des entrées d'un sommateur 20 sur l'autre entrée duquel est branchée la sortie d'un autre sommateur 21. Ce dernier reçoit sur une première entrée une consigne de tension statorique Vsref(eff) et sur une autre entrée une valeur de correction établie, lors de la variation de vitesse, en fonction de la vitesse de rotation Ω et de la dérivée par rapport au temps de cette vitesse, c. à.d. dΩ/dt. La valeur de correction est choisie dans une table 22 dans laquelle est mémorisé un jeu de valeurs de correction dressé empiriquement ou par le calcul. A cet effet, la table 22 est connectée à un capteur 23 couplé à l'arbre d'entraînement 5 pour en mesurer la vitesse de rotation. Le capteur 23 est connecté également à un dérivateur 24 calculant la dérivée dΩ/dt, valeur qui est appliquée à la table 22.

Sur la sortie du sommateur 20 apparaît un signal d'erreur ε1 qui est la différence entre la valeur instantanée de la tension Vseff et la consigne Vsref(eff) affectée, le cas échéant, de la valeur de correction sortant de la table 22. Le signal d'erreur ε1 sur la sortie du sommateur 20 est appliqué à un régulateur proportionnel-intégral 25 dont les coefficients proportionnel et intégral sont ajustés en fonction de la valeur de la vitesse Ω que le régulateur reçoit du capteur 23.

La sortie du régulateur 25 sur laquelle apparaît la consigne Vrref (qui est un signal continûment variable représentant l'amplitude de consigne de la tension rotorique) est connectée à une première entrée d'un multiplicateur 26 dont l'autre entrée est reliée à un générateur 27 d'une tension sinusoïale triphasée d'amplitude normée $\overline{S}r$. La fréquence de cette tension $\overline{S}r$ engendrée par le générateur 27 est déterminée par la sortie d'un sommateur 28 dont les signaux d'entrée sont respectivement une consigne de pulsation statorique ωsref et une valeur p.Ω élaborée par un multiplicateur 29 auquel sont appliquées la sortie du capteur 23 et une valeur p représentative du nombre de paires de pôles de la machine 2. Le multiplicateur 26 multiplie ainsi la consigne de tension Vrref avec la tension sinusoïdale triphasée $\overline{S}r$.

La consigne de pulsation statorique ωsref peut être constante comme c'est le cas dans l'exemple décrit ici.

Cependant, selon une variante de l'invention, il est possible de faire varier cette consigne de pulsation statorique ωsref en fonction de la vitesse de rotation Ω de la machine asynchrone 2.

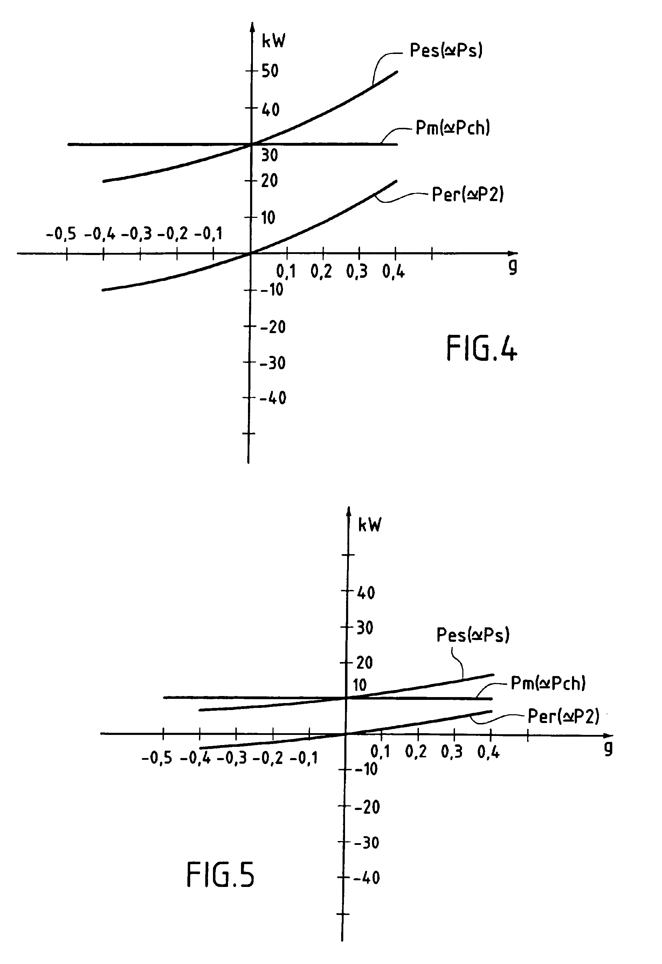

En effet, si les charges du réseau 6 peuvent accepter une certaine variation de la fréquence, une consigne de pulsation statorique variable permet de réduire la plage de variation de glissement de la machine 2 (voir figure 4 qui sera commentée plus en détail par la suite) et ainsi de diminuer la puissance maximale prélevée sur la machine 2 pour alimenter le rotor et donc de réduire les pertes dans les composants du redresseur 12 et de l'onduleur 15.

La variation de la consigne de pulsation statorique est effectuée dans le bloc 28a représenté en pointillés sur la figure 1, connecté au sommateur 28 et recevant le signal de vitesse Ω.

La sortie du multiplicateur 26 est connectée à un limiteur de courant 30 recevant une valeur $\overline{I}$s représentant le courant statorique et fournissant la consigne de tension rotorique $\overline{V}$rref destinée à piloter le rapport cyclique de l'onduleur 15. Cette valeur $\overline{V}$rref est donc appliquée au circuit de commande 16. Le limiteur de courant 30 est prévu pour maintenir le courant rotorique $\overline{I}$r dans des limites acceptables au cas où le stator 3 serait mis en court-circuit par le réseau 6.

Comme il a déjà été spécifié ci-dessus, la régulation de la machine 2 peut être réalisée avec cette seule première boucle de réglage B1 à condition que l'on dispose d'une source de tension constante autonome capable d'appliquer à l'onduleur 15 une tension continue constante Vc.

Cependant, selon un mode de mise en oeuvre

7     **EP 1 104 091 B1**     8

préféré de l'invention, la source de tension continue constante est formée par le redresseur commandé 12 qui est alimenté à partir de la machine 2 elle-même. Dans ce cas, il est avantageux de prévoir une deuxième boucle de réglage B2 chargée d'appliquer au redresseur 12 une consigne de courant $\overline{I}$2ref.

La consigne de tension continue constante Vcref est appliquée à un élévateur au carré 31 qui élabore la valeur $(Vcref)^2$. La valeur instantanée de la tension continue Vc est appliquée à un autre élévateur au carré 32 qui élabore une valeur $Vc^2$. Ces deux valeurs sont appliquées à un sommateur 33 qui engendre une valeur d'erreur $\varepsilon2$. Celle-ci est appliquée à un régulateur proportionnel-intégral 34 à coefficients fixes connecté par sa sortie à un multiplicateur 35 auquel il applique une consigne d'amplitude de courant prélevé I2ref.

Un générateur 36 engendre une tension sinusoïdale triphasée Ss d'amplitude normée et ayant la fréquence de la tension statorique triphasée $\overline{V}$s appliquée à ce générateur 36. La tension sinusoïdale $\overline{S}$s est multipliée par la consigne I2ref qui est un signal continûment variable et qui représente l'amplitude du courant $\overline{I}$2 prélevé au stator 3. Cette consigne est issue du régulateur proportionnel-intégral 34 pour donner comme signal de sortie la consigne de courant triphasée $\overline{I}$2ref destiné à piloter le circuit de commande 13 ajustant le rapport cyclique appliqué au redresseur 12.

La figure 2 symbolise globalement la régulation de la tension Vc. Selon cette figure, on suppose que le redresseur 12 permet d'absorber un courant de prélèvement statorique $\overline{I}$2 parfaitement sinusoïdal, en phase avec la tension $\overline{V}$s. On suppose également que les pertes dans le redresseur 12 et dans l'onduleur 15 sont négligeables. Si Pc est la puissance active instantanée absorbée par le condensateur 14, on a:

$$Pc = \frac{1}{2}C\frac{dVc^2}{dt}$$

dans laquelle C est la capacité du condensateur 14. De plus, on a Pc=P2-Pr. On notera en outre que, dans le schéma de la figure 2, s désigne la variable de Laplace.

On va maintenant examiner le déroulement du procédé de commande selon l'invention en étudiant un phénomène de charge transitoire appliqué par le réseau 6 à la machine 2. On se bornera à un seul exemple à cet égard, savoir celui dans lequel la vitesse de rotation $\Omega$ de l'arbre 5 est inférieure à $\omega$s/p (le glissement est alors supérieur à zéro). Les spécialistes comprendront les autres cas de fonctionnement du dispositif de commande en les déduisant de l'exemple ci-dessus et en s'aidant de la description détaillée qui vient d'être faite de la structure du dispositif de commande.

Lorsque la puissance Pch absorbée par le réseau 6 augmente brusquement, la tension $\overline{V}$s chutera instantanément. L'augmentation du courant $\overline{I}$ch qui résulte de l'appel de puissance du réseau 6, provoque une augmentation du courant statorique $\overline{I}$s. Ceci a pour conséquence un appel de courant rotorique $\overline{I}$r et donc une augmentation de la puissance rotorique Pr. Cette augmentation de puissance est prélevée sur le condensateur 14, ce dont il résulte une chute de la tension Vc.

Dans ces conditions, le sommateur 33 produit un signal d'erreur $\varepsilon2$ qui va provoquer, par l'intermédiaire du régulateur 34, une modification de la consigne d'amplitude de courant I2ref et donc de la consigne triphasée $\overline{I}$2ref. De ce fait, le courant $\overline{I}$2 augmente de façon à réduire la chute de la tension Vc, si bien que Vc devient rapidement de nouveau égale à la consigne Vcref.

Pendant ce temps, comme la tension Vseff a diminué, un signal d'erreur $\varepsilon1$ est produit par le sommateur 20 qui par l'intermédiaire du régulateur 25 provoque une augmentation de la consigne de tension Vrref et, partant, de la consigne triphasée $\overline{V}$rref commandant l'onduleur 15. L'augmentation de la consigne $\overline{V}$rref établira une nouvelle puissance rotorique Pr qui ramène la tension statorique à la valeur correspondant à la consigne Vsref(eff).

On notera que la dynamique de la boucle B2 doit être supérieure à celle de la boucle B1 et en tout cas suffisante pour contrebalancer le prélèvement supplémentaire d'énergie sur le condensateur 14. Lorsque la condition Vc=Vcref est de nouveau réalisée, l'énergie stockée dans le condensateur 14 n'évoluera plus et toute la puissance P2 prélevée par le redresseur 12 sera transmise par l'intermédiaire de l'onduleur 15 au rotor 4.

Lors d'une charge trop élevée de la machine 2, voire d'un court-circuit dans le réseau 6, le courant $\overline{I}$s débité par la machine peut instantanément atteindre une valeur très élevée (en cas de court-circuit plusieurs milliers d'ampères). Ceci risque d'être dommageable pour l'ensemble du générateur électrique et peut également conduire quasi-instantanément à ce qu'on peut appeler une "extinction" du générateur, car la tension Vc chutant rapidement à zéro, les boucles de régulation B1 et B2 ne pourront plus agir. Pour empêcher un tel "effondrement" du générateur 1, il est préféré d'imposer une limitation du courant statorique $\overline{I}$s, ce qui peut être réalisé par l'intermédiaire du bloc 30. Ce dernier est agencé pour imposer un maximum à ne pas dépasser à la consigne $\overline{V}$rref de manière à limiter le niveau d'excitation de la machine 2. Une action semblable pourrait être effectuée en abaissant la consigne Vsrefeff. Suivant l'importance et la nature de la surcharge, on peut également, pour contrer plus facilement la chute de tension Vc, basculer l'alimentation de l'onduleur 15 sur le dispositif de démarrage 18.

La figure 3 représente un schéma possible d'un dispositif de démarrage utilisable pour assurer la phase de démarrage de l'alternateur 2.

Ce dispositif de démarrage 18 comprend un alternateur auxiliaire triphasé 37 entraîné mécaniquement par un dispositif d'entraînement mécanique (non représenté) par l'intermédiaire d'un arbre 38 dont la vitesse

5

de rotation est désignée par Ωau. Il est à noter que sur un aéronef, l'arbre 38 et l'arbre 5 sont confondus, donc Ωau = Ω.

L'alternateur 37 fournit de l'énergie à un redresseur commandé 39 par l'intermédiaire de selfs 40a, 40b et 40c. La sortie du redresseur 39 est connectée au condensateur 14. Elle est commandée par un circuit 41 de commande par variation de largeur d'impulsions.

Le dispositif de démarrage 18 comprend également un générateur 42 de tension sinusoïdale triphasée $\overline{S}au$ auquel est appliquée une tension $\overline{V}au$ fournie par le stator de l'alternateur auxiliaire 37. Cette tension triphasée Sau présente une amplitude normée et elle est appliquée à un multiplicateur 43 dans lequel elle est multipliée par la valeur I2ref provenant du régulateur proportionnel-intégral 34 (figure 1). La sortie du multiplicateur 43 fournit ainsi une consigne de courant $\overline{I}auref$ qui est appliquée au circuit de commande 41 pour le pilotage du rapport cyclique du redresseur 39.

Lors du démarrage, la machine 2 et l'alternateur 37 sont entraînés en même temps. Par exemple, si le générateur 1 est monté sur un aéronef, ils sont entraînés par le ou les moteurs de propulsion de celui-ci.

L'alternateur 37 commence à délivrer la tension Vau de pulsation ωau proportionnel à Ωau. L'activation du circuit de commande 41 provoque alors la charge du condensateur 14 dont la tension Vc passe de 0 à la valeur de la consigne Vcref. Ensuite, le circuit de commande 16 est activé pour qu'il commence à produire la tension $\overline{V}r$, la machine 2 engendrant alors la tension $\overline{V}s$. Dès que cette dernière a atteint sa consigne Vsref(eff), le redresseur commandé 12 prend le relais du redresseur commandé 39. En d'autres termes, le circuit de commande 41 est inhibé et le circuit de commande 13 est activé. La machine 2 est alors opérationnelle.

Dans le cas de l'application à un aéronef, la séquence de démarrage qui vient d'être décrite peut être utilisée pour le redémarrage en vol de la machine 2, par exemple à la suite de la coupure d'un moteur de propulsion de l'aéronef.

Il est également possible, comme déjà décrit, d'utiliser le dispositif de démarrage 18 en cas de court-circuit sur les bornes du stator de la machine 2. Dans ce cas, la séquence d'activation et de désactivation des circuits de commande 13, 16 et 41 devra se dérouler comme décrit ci-dessus à la suite de la détection du court-circuit ($\overline{I}s$ dépassant une valeur prédéterminée).

En se référant maintenant aux figures 4 et 5, on illustrera graphiquement à titre d'exemple non limitatif, le procédé de commande selon l'invention à partir de deux exemples de configurations de fonctionnement d'un générateur équipé du dispositif de commande. Si un tel générateur et son dispositif de commande sont utilisés à bord d'un aéronef, la machine 2 est entraînée à vitesse variable dans une plage de vitesses pouvant aller de 500 à 1200 rad/sec, par exemple (plage de variation qui dépend du moteur de propulsion utilisé sur l'aéronef). La fréquence de fonctionnement choisie dans le présent exemple est constante et égale à 400 Hz et la tension Vsref(eff) est de 115V. On supposera que le nombre de paires de pôles p de la machine 2 est de trois de sorte que le glissement g peut évoluer entre -0,43 et 0,40.

Les tracés des figures 4 et 5 montrent l'évolution des puissances en kW en fonction du glissement g respectivement pour le cas où la charge appliquée à la machine 2 est de 40kVA avec cosφ=O,75 et le cas où la charge est de 10kVA avec un cosφ=1. On suppose dans ces graphiques que les pertes dans la machine 2 et celles entraînées au niveau du redresseur 12 et de l'onduleur 15 sont négligeables. Il est à noter que Pes et Per désignent respectivement la puissance active transmise par les enroulements du rotor 4 à l'entrefer et Pes la puissance active transmise par l'entrefer au stator 3.

Suivant une autre variante de mise en oeuvre du procédé de l'invention, le dispositif de démarrage 18 pourrait être rendu réversible et utilisé dans l'ensemble de la plage de glissement de la machine asynchrone 2, ceci en dehors des seules périodes de démarrage du générateur. Dans le cadre de cette même variante, le dispositif de démarrage 18 pourrait également servir de source de haute tension continue pour fournir la tension Vc.

Ce mode de mise en oeuvre du procédé de l'invention pourra être implémenté dans le cadre des schémas des figures 1 à 3, en bloquant, par exemple temporairement, le redresseur 12 par l'intermédiaire de son circuit de commande 13, tant que l'on souhaite faire fonctionner le générateur selon ce mode de mise en oeuvre.

Cependant, une autre possibilité déjà brièvement énoncée ci-dessus consisterait à omettre les composants 8 à 13 de la figure 1 et à utiliser le dispositif de démarrage 18 en permanence pour la production de la tension Vc.

Dans les deux cas, le redresseur 39 de la figure 3 devra être réalisé réversible, et il doit alors être commandé de telle façon

- que l'alternateur 37 fonctionne en mode moteur électrique lorsque le glissement de la machine 2 est négatif moyennant quoi, de la puissance mécanique sera appliquée sur l'arbre 38 et extraite du rotor 4; et
- que l'alternateur 37 fonctionne en mode générateur électrique lorsque le glissement de la machine 2 est positif, moyennant quoi de la puissance mécanique sera prélevée sur l'arbre 38 et apportée au rotor 4.

**Revendications**

**1.** Procédé de commande d'un générateur électrique autonome (1) comportant une machine tournante asynchrone (2) dont le rotor (4) est bobiné et entraîné mécaniquement, notamment pour l'alimentation de petits réseaux de fourniture d'électricité, à une tension ( $\overline{V}s$) et avec une fréquence (ωs) déterminées, tels que ceux des aéronefs, le stator (3) de ladite machine étant connecté au réseau (6) et dont le rotor (4) est alimenté par l'intermédiaire d'un onduleur (15) piloté par un circuit (16) de commande par variation de largeur d'impulsions, l'onduleur (15) étant lui-même alimenté par une source de tension continue constante (8 à 14), ledit procédé consistant :

à engendrer un signal représentant la consigne de fréquence ou de pulsation statorique (ωsref),
à engendrer un signal représentant la consigne de fréquence ou de pulsation rotorique (ωrref), fonction de la consigne de fréquence statorique et de la vitesse de rotation (Ω) de ladite machine (2),
à engendrer un signal représentant la valeur efficace de consigne (Vsref(eff)) de la tension statorique,
à engendrer un signal d'erreur (ε1), fonction de l'écart entre ladite valeur efficace de consigne (Vsref(eff)) de la tension statorique et la valeur efficace (Vseff) de la tension réelle statorique,
et à imposer audit circuit de commande (16) une consigne de tension rotorique ($\overline{Vrref}$) qui est une fonction dudit signal d'erreur (ε1), de ladite consigne de fréquence rotorique (ωrref),

le procédé étant **caractérisé en ce qu'**il consiste en outre à corriger le signal représentant la valeur efficace de consigne (Vsref(eff)) de la tension statorique, lors des variations de vitesse du rotor (4), en fonction de la valeur instantanée de cette vitesse (Ω) et de la dérivée (dΩ/dt) de cette vitesse.

2. Procédé suivant la revendication 1, **caractérisé en ce qu'**il consiste à régler la consigne de fréquence statorique (ωsref) en fonction de la vitesse de rotation (Ω) de ladite machine (2).

3. Procédé suivant la revendication 1 ou 2 , **caractérisé en ce qu'**il consiste en outre à soumettre ledit signal d'erreur (ε1) à une régulation du type proportionnel-intégral (25).

4. Procédé suivant la revendication 3, **caractérisé en ce que** les coefficients de ladite régulation de type proportionnel-intégral (25) sont établis en fonction de la vitesse de rotation (Ω) dudit rotor (4).

5. Procédé suivant la revendication 4, **caractérisé en ce qu'**il consiste à engendrer une tension sinusoïdale d'amplitude normée ($\overline{Sr}$) ayant une fréquence rotorique prédéterminée (ωrref) et à multiplier le résultat de ladite régulation de type proportionnel-intégral (25) avec ladite tension sinusoïdale d'amplitude normée ($\overline{Sr}$).

6. Procédé suivant la revendication 5, **caractérisé en ce qu'**il consiste à ajuster la fréquence (ωrref) de ladite tension sinusoïdale d'amplitude normée ($\overline{Sr}$) en fonction d'une valeur de référence de pulsation statorique (ωsref) et du glissement (p.Ω) du générateur (2).

7. Procédé suivant l'une quelconque des revendications 1 à 6, **caractérisé en ce qu'**il consiste à limiter ladite consigne de tension rotorique ($\overline{Vrref}$) à une valeur maximale prédéterminée, fonction du courant statorique ($\overline{Is}$).

8. Procédé suivant la revendication 1, **caractérisé en ce que**, dans le cas où ladite tension continue constante (Vc) est obtenue par l'intermédiaire d'un redresseur commandé (12) alimenté par un courant ($\overline{I2}$) prélevé sur le courant ($\overline{Is}$) produit par le stator (3) de ladite machine (2), et où ce redresseur (12) est piloté par un second circuit (13) de commande par variation de largeur d'impulsions, le procédé consiste également à engendrer une consigne de tension continue (Vcref), à engendrer un second signal d'erreur (ε2) qui est une fonction de l'écart entre ladite consigne de tension continue (Vcref) et la tension continue réelle (Vc) produite par ledit redresseur (12), et à imposer audit second circuit de commande (13) une consigne de courant de prélèvement statorique ($\overline{I2ref}$) qui est une fonction dudit second signal d'erreur (ε2) et de la pulsation statorique réelle.

9. Procédé suivant la revendication 8, **caractérisé en ce que** ledit second signal d'erreur (ε2) est établi en fonction de la différence entre le carré de ladite consigne de tension continue (Vcref) et le carré de ladite tension continue réelle (Vc).

10. Procédé suivant la revendication 9, **caractérisé en ce qu'**il consiste à soumettre ledit second signal d'erreur (ε2) à une seconde régulation du type proportionnel-intégral (34).

11. Procédé suivant la revendication 10, **caractérisé en ce qu'**il consiste à engendrer une seconde tension sinusoïdale d'amplitude normée ($\overline{Ss}$) ayant une fréquence (ωs) égale à la fréquence statorique réelle et à multiplier le résultat de ladite seconde régulation de type proportionnel-intégral (34) avec ladite seconde tension sinusoïdale d'amplitude normée ($\overline{Ss}$).

12. Procédé suivant l'une quelconque des revendications 1 à 11, **caractérisé en ce qu'**il consiste, au démarrage dudit générateur (1), à engendrer la tension (Vc) de ladite source de tension continue constante par l'intermédiaire d'un alternateur auxiliaire (37) et à couper cet alternateur auxiliaire, lorsque ledit onduleur (15) ayant commencé à fonctionner, la valeur efficace de la tension statorique (Vseff) a atteint sa valeur de consigne (Vseff(ref)).

**13.** Procédé suivant la revendication 12, **caractérisé en ce qu'**il consiste à redresser le courant ($\bar{\text{I}}$au) fourni par ledit alternateur auxiliaire (37) par l'intermédiaire d'un second redresseur (39) piloté par un troisième circuit (41) de commande par variation de largeur d'impulsions et à imposer audit troisième circuit de commande (41) une consigne de courant ($\bar{\text{I}}$auref) pour ledit alternateur auxiliaire (37).

**14.** Procédé suivant les revendications 11 et 13, **caractérisé en ce qu'**il consiste à engendrer ladite consigne de courant ($\bar{\text{I}}$auref) pour l'alternateur auxiliaire (37) en fonction du résultat (I2ref) de ladite seconde régulation proportionnel-intégral (34).

**15.** Procédé suivant la revendication 14, **caractérisé en ce qu'**il consiste également à engendrer une troisième tension sinusoïdale d'amplitude normée ($\bar{\text{S}}$au) de fréquence égale à celle de la tension ($\bar{\text{V}}$au) dudit alternateur auxiliaire (37) et à multiplier le résultat de ladite seconde régulation proportionnel-intégral (I2ref) avec ladite troisième tension sinusoïdale ($\bar{\text{S}}$au) pour engendrer ladite consigne de courant ($\bar{\text{I}}$auref) pour l'alternateur auxiliaire (37).

**16.** Procédé suivant les revendications 5 et 12 prises ensemble, **caractérisé en ce que** ladite seconde régulation (34) présente une dynamique supérieure à celle de ladite première régulation (25).

**17.** Procédé suivant la revendication 1, **caractérisé en ce que** il consiste en outre à,

- engendrer ladite tension continue constante (Vc) par l'intermédiaire d'un alternateur auxiliaire (37) et d'un redresseur réversible (39) commandé par un second circuit de commande (41),
- faire fonctionner ledit alternateur auxiliaire (37) en mode moteur électrique, lorsque le glissement de ladite machine tournante asynchrone (2) est négatif, et
- faire fonctionner ledit alternateur auxiliaire (37) en mode générateur électrique, lorsque le glissement de ladite machine tournant asynchrone (2) est positif.

**18.** Générateur électrique autonome, notamment pour aéronef, comportant une machine tournante asynchrone (2) dont le rotor (4) est bobiné et entraîné mécaniquement, notamment pour l'alimentation de petits réseaux de fourniture d'électricité, à une tension ($\bar{\text{V}}$s) et avec une fréquence (ωs) déterminées, tels que ceux des aéronefs, le stator (3) de ladite machine étant connecté au réseau (6) et dont le rotor (4) étant alimenté par l'intermédiaire d'un onduleur (15) piloté par un circuit (16) de commande par variation de largeur d'impulsions, l'onduleur (15) étant lui-même alimenté par une source de tension continue constante (8 à 14), ledit générateur électrique autonome comprenant,

des moyens (28) pour engendrer un signal représentant la consigne de fréquence ou de pulsation rotorique (ωrref), fonction d'un signal représentant la consigne de fréquence statorique et de la vitesse de rotation (Ω) de ladite machine (2),
des moyens (20) pour engendrer un signal d'erreur (ε1), fonction de l'écart entre un signal représentant la valeur efficace de consigne (Vsref (eff)) de la tension statorique et un signal représentant la valeur efficace (Vseff) de la tension réelle statorique,
des moyens pour imposer audit circuit de commande (16) une consigne de tension rotorique ($\bar{\text{V}}$rref) qui est fonction dudit signal d'erreur (ε1) et de ladite consigne de fréquence rotorique (ωrref),

ledit générateur électrique autonome étant **caractérisé en ce qu'**il comprend des moyens (21, 22) pour corriger le signal représentant la valeur efficace de consigne (Vsref(eff)) de la tension statorique, lors des variations de vitesse du rotor (4), en fonction de la valeur instantanée de cette vitesse (Ω) et de la dérivée (dΩ/dt) de cette vitesse.

## Claims

**1.** A method of controlling a stand-alone electrical generator (1) including an asynchronous rotating machine (2) whose wound rotor (4) is driven mechanically, in particular to power small electrical power supply networks, at a particular voltage ($\bar{\text{V}}$s) and with a particular frequency (cos), such as those used on aircraft, the stator (3) of said machine being connected to the network (6) and its rotor (4) being excited by an inverter (15) controlled by a pulse width modulation control circuit (16), the inverter (15) itself being excited by a constant DC voltage source (8 to 14), which method consists of:

generating a signal representing the stator frequency (or angular frequency) set point (ωsref),
generating a signal representing the rotor frequency (or angular frequency) set point (ωrref), as a function of the stator frequency set point and the rotation speed (Q) of said machine (2),
generating a signal representing the stator voltage rms set point value (Vsref(rms)),
generating an error signal (ε1) as a function of the difference between said stator voltage rms set point value (Vsref(rms)) and the rms value (Vsrms) of the actual stator voltage,
imposing on said control circuit (16) a rotor volt-

age set point ($\overline{V}$rref) which is a function of said error signal ($\varepsilon 1$) and said rotor frequency set point ($\omega$rref),

which method is **characterized in that** it consists morever of correcting said stator reference voltage set point (Vsref(rms)) in the event of variations in the speed of the rotor (4) as a function of the instantaneous value of that speed ($\Omega$), and of the derivative ($d\Omega/dt$) of that speed.

2. A method according claim 1, **characterized in that** it consists of adjusting the stator frequency set point ($\omega$sref) as a function of the rotation speed ($\Omega$) of said machine (2).

3. A method according to claim 1 or 2, **characterized in that** it consists of submitting said error signal ($\varepsilon 1$) to proportional-integral control (25).

4. A method according to claim 3, **characterized in that** the coefficients of said proportional-integral control (25) are established as a function of the rotation speed ($\Omega$) of said rotor (4).

5. A method according to claim 4, **characterized in that** it consists of generating a standardized amplitude sinusoidal voltage ($\overline{S}$r) having a predetermined rotor frequency ($\omega$rref) and multiplying the result of said proportional-integral control (25) by said standardized amplitude sinusoidal voltage ($\overline{S}$r).

6. A method according to claim 5, **characterized in that** it consists of varying the frequency ($\omega$rref) of said standardized amplitude sinusoidal voltage ($\overline{S}$r) as a function of a stator angular frequency reference value ($\omega$sref) and the slip ($p.\Omega$) of the generator (2).

7. A method according to any of claims 1 to 6, **characterized in that** it consists of limiting said rotor voltage set point ($\overline{V}$rref ) to a predetermined maximum value which is a function of the stator current ($\overline{I}$s).

8. A method according to claim 1, **characterized in that**, if said constant DC voltage (Vc) is obtained by means of a controlled rectifier (12) excited by a current ($\overline{I}2$) taken from the current ($\overline{I}$s) produced by the stator (3) of said machine (2), and the rectifier (12) is controlled by a second pulse width modulation control circuit (13), the method also consists of generating a DC voltage set point (Vcref), generating a second error signal ($\varepsilon 2$) which is a function of the difference between said DC voltage set point (Vcref) and the actual DC voltage (Vc) produced by said rectifier (12), and imposing on said second control circuit (13) a set point ($\overline{I}2$ref) for the current taken for the rotor from the stator current which is a function of said second error signal ($\varepsilon 2$) and the actual stator angular frequency.

9. A method according to claim 8, **characterized in that** said second error signal ($\varepsilon 2$) is established as a function of the difference between the square of said DC voltage set point (Vcref) and the square of said actual DC voltage (Vc).

10. A method according to claim 9, **characterized in that** it consists of submitting said second error signal ($\varepsilon 2$) to a second stage of proportional-integral control (34).

11. A method according to claim 10, **characterized in that** it consists of generating a second standardized amplitude sinusoidal voltage ($\overline{S}$s) having a frequency ($\omega$s) equal to the actual stator frequency and multiplying the result of said second stage of proportional-integral control (34) with said second standardized amplitude sinusoidal voltage ($\overline{S}$s).

12. A method according to any of claims 1 to 11, **characterized in that**, when said generator (1) is started, said constant DC voltage (Vc) is generated by an auxiliary alternator (37) and the auxiliary alternator is switched out when said inverter (15) has begun to function and the rms value of the stator voltage (Vsrms) has reached its set point value (Vsrms (ref)).

13. A method according to claim 12, **characterized in that** it consists of rectifying the current ($\overline{I}$ au) supplied by said auxiliary alternator (37) by means of a second rectifier (39) controlled by a third pulse width modulation control circuit (41) and imposing on said third control circuit (41) a current set point ($\overline{I}$auref) for said auxiliary alternator (37).

14. A method according to claims 11 and 13, **characterized in that** it consists of generating said current set point ($\overline{I}$auref) for the auxiliary alternator (37) as a function of the result (I2ref) of said second stage of proportional-integral control (34).

15. A method according to claim 14, **characterized in that** it also consists of generating a third sinusoidal voltage of standardized amplitude ($\overline{S}$au) at the same frequency as the voltage ($\overline{V}$au) from said auxiliary alternator (37) and multiplying the result of said second stage of proportional-integral control (I2ref) by said third sinusoidal voltage ($\overline{S}$au) to generate said current set point ($\overline{I}$auref) for the auxiliary alternator (37).

16. A method according to claim 5 in conjunction with claim 12, **characterized in that** said second control stage (34) has a greater dynamic range than the first control stage (25).

**17.** A method according to claim 1 **characterized in that** it consists of:

generating said constant DC voltage (Vc) by means of an auxiliary alternator (37) and a reversible rectifier (39) controlled by a second circuit,

operating said auxiliary alternator in an electrical motor mode, when the slip of said asynchronous rotating machine is negative, and

operating said auxiliary alternator in an electrical generator mode, when the slip of said asynchronous rotating machine is positive.

**18.** A stand-alone electrical generator, such as those used on aircraft, including an asynchronous rotating machine (2) whose wound rotor (4) is driven mechanically, in particular to power small electrical power supply networks, at a particular voltage (Vs) and with a particular frequency ($\omega$s), such as those used on aircraft, the stator (3) of said machine being connected to the network (6) and its rotor (4) being excited by an inverter controlled by a first pulse width modulation control circuit, the inverter (15) itself being excited by a constant DC voltage source (8 to 14), said stand alone electrical generator comprising, means (28) for generating a signal representing the rotor or frequency ($\omega$rref) set point, as a function of the stator frequency set point and the rotation speed ($\Omega$) of said machine (2), means (20) for generating an error signal ($\epsilon$1) as a function of the difference between said stator voltage rms set point value (Vsref(rms)) and the rms value of the actual stator voltage (Vs (eff)), and, means for imposing on said control circuit (16) a rotor voltage set point (Vrref) which is a function of said error signal ($\epsilon$1) and said rotor frequency set point ($\omega$rref), said stand alone electrical generator **characterized in that** it includes means (21, 22) for correcting said stator reference voltage set point (Vsref(rms)) in the event of variations in the speed of the rotor (4) as a function of the instantaneous value of that speed ($\Omega$), and of the derivative (d$\Omega$/dt) of that speed.

## Patentansprüche

**1.** Verfahren zum Steuern eines selbstständigen elektrischen Generators (1), umfassend eine umlaufende Asynchronmaschine (2), deren Rotor (4) umwickelt ist und mechanisch angetrieben wird, insbesondere für die Versorgung von kleinen Elektrizitätslieferungsnetzen, mit einer bestimmten Spannung ($\overline{V}$s) und mit einer bestimmten Frequenz ($\omega$s), wie denjenigen der Luftfahrzeuge, wobei der Stator (3) der Maschine mit dem Netz (6) verbunden ist und deren Rotor (4) mittels eines Wechselrichters (15) versorgt wird, der von einem Steuerkreis (16) durch Veränderung der Pulsbreite angesteuert wird, wobei der Wechselrichter seinerseits durch eine Quelle für eine konstante Gleichspannung (8 bis 14) versorgt wird, wobei dieses Verfahren besteht aus:

dem Erzeugen eines Signals, das für den Sollwert der Frequenz oder Schwingung des Stators ($\omega$sref) steht,

dem Erzeugen eines Signals, das für den Sollwert der Frequenz oder Schwingung des Rotors ($\omega$rref) in Abhängigkeit von dem Sollwert der Statorfrequenz und der Umdrehungsgeschwindigkeit ($\Omega$) der Maschine (2) steht,

dem Erzeugen eines Signals, das für den Soll-Effektivwert (Vsref(eff)) der Statorspannung steht,

dem Erzeugen eines Fehlersignals ($\epsilon$1) in Abhängigkeit von dem Unterschied zwischen dem Soll-Effektivwert (Vsref(eff)) der Statorspannung und dem Effektivwert (Vseff) der wirklichen Statorspannung,

und dem Aufgeben auf den Steuerkreis (16) eines Sollwertes der Rotorspannung ($\overline{V}$ rref), welcher eine Funktion des Fehlersignals ($\epsilon$1) des Sollwertes der Rotorfrequenz ($\omega$rref) ist,

wobei das Verfahren **dadurch gekennzeichnet ist, dass** es überdies daraus besteht, das Signal, das für den Soll-Effektivwert (Vsref(eff)) der Statorspannung steht, bei Schwankungen der Geschwindigkeit des Rotors (4) in Abhängigkeit von dem Augenblickswert dieser Geschwindigkeit ($\Omega$) und der Ableitung nach der Zeit (d$\Omega$/dt) dieser Geschwindigkeit zu korrigieren.

**2.** Verfahren gemäß Anspruch 1, **dadurch gekennzeichnet, dass** es darin besteht, den Sollwert der Statorfrequenz ($\omega$sref) in Abhängigkeit von der Umdrehungsgeschwindigkeit ($\Omega$) der Maschine (2) zu regeln.

**3.** Verfahren gemäß Anspruch 1 oder 2, **dadurch gekennzeichnet, dass** es überdies darin besteht, das Fehlersignal ($\epsilon$1) einer Regelung vom Proportional-Integral-Typ (25) zu unterwerfen.

**4.** Verfahren gemäß Anspruch 3, **dadurch gekennzeichnet, dass** die Koeffizienten der Regelung vom Proportional-Integral-Typ (25) in Abhängigkeit von der Umdrehungsgeschwindigkeit ($\Omega$) des Rotors (4) festgelegt werden.

**5.** Verfahren gemäß Anspruch 4, **dadurch gekennzeichnet, dass** es darin besteht, eine sinusförmige Spannung von normierter Amplitude ($\overline{S}$ r) mit einer vorbestimmten Rotorfrequenz ($\omega$rref) zu erzeugen und das Ergebnis der Regelung vom Proportional-Integral-Typ (25) mit der sinusförmige Spannung von normierter Amplitude ($\overline{S}$ r) zu multiplizieren.

6. Verfahren gemäß Anspruch 5, **dadurch gekennzeichnet, dass** es darin besteht, die Frequenz (ωrref) der sinusförmige Spannung von normierter Amplitude ($\overline{S}$ r) in Abhängigkeit von einem Bezugswert der Statorschwingung (ωsref) und von dem Schlupf (p.Ω) des Generators zu verstellen.

7. Verfahren gemäß irgendeinem der Ansprüche 1 bis 6, **dadurch gekennzeichnet, dass** es darin besteht, den Sollwert der Rotorspannung ($\overline{V}$ rref) auf einen vorbestimmten Maximalwert zu begrenzen, der eine Funktion des Statorstromes ($\overline{I}$ s) ist.

8. Verfahren gemäß Anspruch 1, **dadurch gekennzeichnet, dass** in dem Fall wo die konstante Gleichspannung (Vc) mittels eines gesteuerten Gleichrichters (12) erhalten wird, der von einem Strom ($\overline{I}$ 2) gespeist wird, welcher aus dem von dem Stator (3) der Maschine (2) hergestellten Strom ($\overline{I}$s) entnommen ist, und wo dieser Gleichrichter (12) von einem zweiten Steuerkreis (13) durch Veränderung der Pulsbreiten geregelt wird, das Verfahren auch darin besteht, einen Sollwert der Gleichspannung (Vcref) zu erzeugen, ein zweites Fehlersignal (ε2) zu erzeugen, das eine Funktion des Unterschiedes zwischen dem Sollwert der Gleichspannung (Vcref) und der von dem Gleichrichter (12) hergestellten tatsächlichen Gleichspannung (Vc) ist, und dem zweiten Steuerkreis (13) einen Sollwert des zu entnehmenden Statorstromes ($\overline{I}$2ref) vorzugeben, der eine Funktion von diesem zweiten Fehlersignal (ε2) und der tatsächlichen Statorschwingung ist.

9. Verfahren gemäß Anspruch 8, **dadurch gekennzeichnet, dass** das zweite Fehlersignal (ε2) in Abhängigkeit von dem Unterschied zwischen dem Quadrat des Sollwertes der Gleichspannung (Vcref) und dem Quadrat der tatsächlichen Gleichspannung (Vc) festgelegt wird.

10. Verfahren gemäß Anspruch 9, **dadurch gekennzeichnet, dass** es darin besteht, das zweite Fehlersignal (ε2) einer zweiten Regelung vom Proportional-Integral-Typ (34) zu unterwerfen.

11. Verfahren gemäß Anspruch 10, **dadurch gekennzeichnet, dass** es darin besteht, eine zweite sinusförmige Spannung von normierter Amplitude ($\overline{S}$ s) mit einer Frequenz (ωS) gleich der realen Statorfrequenz zu erzeugen und das Ergebnis der zweiten Regelung vom Proportional-Integral-Typ (34) mit der zweiten sinusförmige Spannung von normierter Amplitude ($\overline{S}$ s) zu multiplizieren.

12. Verfahren gemäß irgendeinem der Ansprüche 1 bis 11, **dadurch gekennzeichnet, dass** es darin besteht, beim Anlassen des Generators (1) die Spannung (Vc) der Gleichspannungsquelle mittels eines Hilfs-Wechselstromgenerators (37) zu erzeugen und diesen Hilfs-Wechselstromgenerator abzuschalten, wenn der Effektivwert der Statorspannung (Vseff) seinen Sollwert (Vseff(ref)) erreicht hat, nachdem der Wechselrichter (15) begonnen hat, in Betrieb zu sein.

13. Verfahren gemäß Anspruch 12, **dadurch gekennzeichnet, dass** es darin besteht, den von dem Hilfs-Wechselstromgenerator (37) gelieferten Strom ($\overline{I}$ au) mittels eines zweiten Gleichrichters (39) gleich zu richten, der von einem dritten Steuerkreis (41) durch Veränderung der Pulsbreite angesteuert wird, und dem dritten Steuerkreis (41) einen Stromsollwert ($\overline{I}$ auref) für den Hilfs-Wechselstromgenerator (37) vorzugeben.

14. Verfahren gemäß den Ansprüchen 11 und 13, **dadurch gekennzeichnet, dass** es darin besteht, den Stromsollwert ($\overline{I}$ auref) für den Hilfs-Wechselstromgenerator (37) in Abhängigkeit von dem Ergebnis (I2ref) der zweiten Proportional-Integral-Regelung (34) zu erzeugen.

15. Verfahren gemäß Anspruch 14, **dadurch gekennzeichnet, dass** es auch darin besteht, eine dritte sinusförmige Spannung von normierter Amplitude ($\overline{S}$ au) mit einer Frequenz gleich derjenigen der Spannung ($\overline{V}$ au) des Hilfs-Wechselstromgenerators (37) zu erzeugen und das Ergebnis der zweiten Regelung vom Proportional-Integral-Typ (I2ref) mit der dritten sinusförmigen Spannung ($\overline{S}$ au) zu multiplizieren, um den Stromsollwert ($\overline{I}$ auref) für den Hilfs-Wechselstromgenerator (37) zu erzeugen.

16. Verfahren gemäß den zusammen genommenen Ansprüchen 5 und 12, **dadurch gekennzeichnet, dass** die zweite Regelung (34) eine höhere Dynamik als diejenige der ersten Regelung (25) aufweist.

17. Verfahren gemäß Anspruch 1, **dadurch gekennzeichnet, dass** es überdies besteht aus

- dem Erzeugen der konstanten Gleichspannung (Vc) mittels eines Hilfs-Wechselstromgenerators (37) und eines reversiblen Gleichrichters (39), der von einem zweiten Steuerkreis (41) gesteuert wird,
- dem Inbetriebnehmen des Hilfs-Wechselstromgenerators (37) im Elektromotor-Modus, wenn der Schlupf der umlaufenden Asynchronmaschine (2) negativ ist, und
- dem Inbetriebnehmen des Hilfs-Wechselstromgenerators (37) im Elektrogenerator-Modus, wenn der Schlupf der umlaufenden Asynchronmaschine (2) positiv ist.

18. Selbstständiger elektrischer Generator, insbesondere für Luftfahrzeuge, umfassend eine umlaufende Asynchronmaschine (2), deren Rotor (4) umwickelt ist und mechanisch angetrieben wird, insbesondere für die Versorgung von kleinen Elektrizitätslieferungsnetzen, mit einer bestimmten Spannung ($\overline{V}$ s) und mit einer bestimmten Frequenz ($\omega$s), wie von denjenigen der Luftfahrzeuge, wobei der Stator (3) der Maschine mit dem Netz (6) verbunden ist und deren Rotor (4) mittels eines Wechselrichters (15) versorgt wird, der von einem Steuerkreis (16) durch Veränderung der Pulsbreite angesteuert wird, wobei der Wechselrichter (15) seinerseits durch eine Quelle für eine konstante Gleichspannung (8 bis 14) versorgt wird,

wobei dieser selbstständige elektrische Generator umfasst:

Mittel (28) zum Erzeugen eines Signals, das für den Sollwert der Frequenz oder Schwingung des Rotors ($\omega$rref) steht, in Abhängigkeit von einem Signal, das für den Sollwert der Statorfrequenz steht, und von der Umdrehungsgeschwindigkeit ($\Omega$) der Maschine (2),

Mittel (20) zum Erzeugen eines Fehlersignals ($\varepsilon$1) in Abhängigkeit von dem Unterschied zwischen einem Signal, das für den Soll-Effektivwert (Vsref(eff)) der Statorspannung steht und einem Signal, das für den Effektivwert (Vseff) der realen Statorspannung steht,

Mittel, um dem Steuerkreis (16) einen Sollwert der Rotorspannung ($\overline{V}$ rref) aufzugeben, welcher eine Funktion des Fehlersignals und des Sollwertes der Rotorfrequenz ($\omega$rref) ist,

wobei der selbstständige elektrische Generator **dadurch gekennzeichnet ist, dass** er Mittel (21, 22) umfasst, um das Signal, das für den Soll-Effektivwert (Vsref(eff)) der Statorspannung steht, bei Schwankungen der Geschwindigkeit des Rotors (4) in Abhängigkeit von dem Augenblickswert dieser Geschwindigkeit ($\Omega$) und der Ableitung nach der Zeit (d$\Omega$ /dt) dieser Geschwindigkeit zu korrigieren.

FIG.1

EP 1 104 091 B1

FIG.2

$$V_{cref}^2 \xrightarrow{+} \bigotimes \xrightarrow{\varepsilon_2} \boxed{PI} \xrightarrow{I2ref=I2} \boxed{\frac{3}{\sqrt{2}}V_{s\,eff}} \xrightarrow{P2 +} \bigotimes \xrightarrow{P_c} \boxed{\frac{1}{\frac{C}{2}s}} \xrightarrow{V_c^2}$$

$V_c^2$

$P_r$

FIG.3

18

$\Omega_{au}$

37

$\bar{I}_{au}$

40a

39

$\bar{V}_{au}$

40b

40c

$V_c$

$\bar{I}$

41

38

$\downarrow V_c$

43

I2ref

$\times$

$\bar{I}_{au}\,ref$

$\bar{S}_{au}$

42

$\bar{V}_{au}$

FIG.4

FIG.5